# EUROPÄISCHE PATENTANMELDUNG

(11) **EP 3 858 201 A1**
(43) Veröffentlichungstag der Anmeldung: **04.08.2021**
(21) Anmeldenummer: 21151475.7
(22) Anmeldetag: 14.01.2021
(51) Int. Cl.: A47J 31/06, A47J 31/36

(54) **GETRÄNKEBEREITER MIT VERÄNDERLICHER BRÜHKAMMER**

(30) Priorität: 31.01.2020 DE 102020102449
(71) Anmelder: Miele & Cie. KG, 33332 Gütersloh (DE)
(72) Erfinder: Tembaak, Jutta, 49492 Westerkappeln (DE); Schönherr, Dietmar, 32657 Lemgo (DE)

(57) **Zusammenfassung**

Die Erfindung betrifft einen Getränkeautomat (1) mit einem Strömungsleitungssystem (2) mit
- einer Wasserquelle (14)
- einer Brüheinheit (40), welche folgende Merkmale umfasst:
ein Brühsieb (43);
eine Brühkammer (41) zur Aufnahme von aufzubrühender Brühsubstanz (S);
ein Wassereinlassmittel (42) mit zumindest einer Einlassleitung (L4) zum Einlassen von Brühwasser (W) in die Brühkammer (41), wobei die Brühkammer (41) zwischen dem Brühsieb (43) und dem Wassereinlassmittel (42) angeordnet ist und das Wassereinlassmittel (42) in einer Durchlaufrichtung (F) des Brühwassers (W) durch die Brühkammer (41) dem Brühsieb (43) vorgelagert ist,

- einer Zuführungsvorrichtung (70, 73) zum Zuführen einer vorbestimmten Menge der Brühsubstanz (S) in die Brühkammer (41),
- eine Heizeinrichtung (9) zum Erhitzen des der Brühkammer (41) zugeführten Wassers
- eine Pumpe (8), die dazu ausgebildet ist, das Wasser (W) aus der Quelle (14) zur Brühkammer (41) zu fördern,
- eine Steuereinrichtung (18) zur Aktivierung und Deaktivierung der genannten Aktoren (8, 9, 72) zur Zubereitung eines ausgewählten Getränks.

Das Brühsieb (43) ist dabei, bezogen zum Inneren der Brühkammer (41), mittels eines von der Steuereinrichtung (18) gesteuerten Stellantriebs (50) verfahrbar ausgebildet, um das Volumen der Brühkammer (41) zu verändern, wobei die Steuereinrichtung (18) dazu eingerichtet ist, den Stellantrieb (50) während aktivierter Pumpe (8) zu aktivieren.

## Beschreibung

Die Erfindung betrifft einen Getränkeautomaten mit einem Strömungsleitungssystem mit
- einer Wasserquelle
- einer Brüheinheit, die folgende Merkmale aufweist:
   ein Brühsieb;
   eine Brühkammer zur Aufnahme von aufzubrühender Brühsubstanz;
   ein Wassereinlassmittel mit zumindest einer Einlassleitung zum Einlassen von Brühwasser in die Brühkammer, wobei die Brühkammer zwischen dem Brühsieb und dem Wassereinlassmittel angeordnet ist und das Wassereinlassmittel in einer Durchlaufrichtung des Brühwassers durch die Brühkammer dem Brühsieb vorgelagert ist,
- einer Zuführungsvorrichtung zum Zuführen einer vorbestimmten Menge einer ersten Brühsubstanz in die Brühkammer,
- gegebenenfalls eine Heizeinrichtung zum Erhitzen des der Brühkammer zugeführten Wassers
- eine Pumpe, die dazu ausgebildet ist, das Wasser aus der Quelle zur Brühkammer zu fördern,
- eine Steuereinrichtung zur Aktivierung und Deaktivierung der genannten Aktoren zur Zubereitung eines ausgewählten Getränks.

Ein Getränkebereiter mit einer entsprechenden Brüheinheit ist aus der EP 1 393 663 A1 bekannt. Hier ist eine Kaffeemaschine mit einer integrierten Kaffeemühle und einem Pulverschacht offenbart, welcher zur Zuführung von gemahlenem Kaffee aus der Kaffeemühle zu einem bewegbaren Brühzylinder dient, sowie einem mit einer handbetätigbaren Abdeckung versehenen Einlass für bereits gemahlenen Spezialkaffee.

Aus der EP 2 895 037 B1 ist ein Heißgetränkebereiter mit einer Brüheinheit bekannt, bei der das Brühsieb in der Brühkammer als ebene Fläche ausgebildet ist. Hierbei kann es vorkommen, dass Randbereiche der Brühkammer nicht mit Wasser beaufschlagt werden, sodass nicht alle gewünschten oder in der Brühkammer bereitstehenden Aromastoffe extrahiert werden.

Der Erfindung liegt somit die Aufgabe zu Grunde, einen Heißgetränkebereiter dahingehend weiterzubilden, dass eine Vielzahl von unterschiedlichen Brühgetränken optimal zubereitet werden können.

Erfindungsgemäß wird unter anderem diese Aufgabe durch einen Getränkebereiter mit den Merkmalen des unabhängigen Anspruchs 1 gelöst. Vorteilhafte Ausgestaltungen und Weiterbildungen der Erfindung ergeben sich aus den abhängigen Ansprüchen.

Ein mit der Erfindung erreichbarer Vorteil besteht darin, dass die in der Brühkammer befindliche Brühsubstanz vollständig und optimal durchflutet wird und dadurch alle gewünschten geschmacksrelevanten Stoffe gelöst werden. Die Qualität bzw. der Geschmack des fertig aufgebrühten Getränks wird erheblich verbessert, gegenüber der Verwendung einer Brühkammer mit konstantem Volumen.

Hierzu ist das Brühsieb bezogen zum Inneren der Brühkammer mittels eines von der Steuereinrichtung gesteuerten Stellantriebs verfahrbar gelagert oder geführt, um das Volumen der Brühkammer während der Getränkezubereitung zu verändern, wobei die Steuereinrichtung dazu eingerichtet ist, den Stellantrieb während laufender Pumpe zu aktivieren. Damit wird das Kaffeepulver innerhalb der Brühkammer komprimiert oder dekomprimiert, während gleichzeitig das Brühwasser in oder durch die Kammer gepumpt wird. Dadurch wird insgesamt die Durchströmung der Brühsubstanz mit dem Brühwasser verbessert, weil der gesamte Raum der Brühkammer zuverlässig durchflutet wird. Damit wird ein schnelles und vollständiges Lösen der gewünschten Geschmacksstoffe aus den Pulverkörnern erreicht. Das Lösen von unerwünschten Geschmacksstoffen, beispielsweise Bitterstoffe, die sich erst später nach Beginn des Brühvorgangs lösen, kann vermieden werden, wenn der Brühvorgang beendet wird, bevor sich die Bitterstoffe aus den Pulverkörnern lösen.

In einer zweckmäßigen Ausführung der Erfindung ist die Steuereinrichtung dazu eingerichtet, den Stellantrieb derart zu aktivieren, dass die Brühkammer zu Beginn der Getränkezubereitung ein erstes Volumen und nach Ablauf einer vorbestimmten Dauer während der Getränkezubereitung ein zweites Volumen aufweist, welches sich vom ersten Volumen unterscheidet. Damit nimmt die Veränderung des Volumens eine vorbestimmte Zeit in Anspruch, sodass sich ein gleichmäßiges Verdichten der Körner einstellt. Dies stellt wiederrum eine vollständige Extraktion sicher.

In einer weiteren, insgesamt vorteilhaften Ausführung ist der Unterschied des zweiten Volumens zum ersten Volumen im Bereich des 0,8- fache bis 0,4- fachen eingestellt. Dieses Verdichtungsverhältnis stellt die Steuereinrichtung bereit, die entsprechend eingerichtet und programmiert ist, den Stellantrieb entsprechend zu aktivieren. Durch die variable Brühkammer wird erreicht, dass zu Beginn des Brühvorgangs die Zwischenräume zwischen den Körner ein Maß haben, dass alle Körner gut umspült werden und entsprechend durchfeuchtet werden können. Dadurch werden die richtigen Geschmackstoffe aktiviert bzw. gelöst. Die Korngröße kann dabei je nach Mahlgrad unterschiedlich sein, um die für die verwendete Bohne die optimale Geschmacksentfaltung zu erreichen. Der darauffolgende, erhöhte Druck bewirkt eine stärkere Verpressung des Kaffeepulvers innerhalb der Kammer, was die Zwischenräume verkleinert, so dass die Strömungsgeschwindigkeit in den Zwischenräumen erhöht wird (Wechsel von einer Verwirbelung des Wassers in den Zwischenräumen zu einer Art Kanalisierung). Dadurch werden angelöste Geschmackstoffe aus den einzelnen Körnern zuverlässig in das Getränk geleitet. Insgesamt kann mit einer verkürzten Brühdauer eine bessere Geschmacksentfaltung erreicht werden, gegenüber einem herkömmlichen Brühvorgang, bei dem das Volumen der Brühkammer nicht verändert wird.

In einer anderen Ausführung ist der Unterschied des zweiten Volumens zum ersten Volumen im Bereich des 1,2- bis 2,4- fachen eingestellt. Dieses Verdichtungsverhältnis stellt die Steuereinrichtung bereit, die entsprechend eingerichtet und programmiert ist, den Stellantrieb entsprechend zu aktivieren. Durch die variable Brühkammer wird erreicht werden, dass zu Beginn des Brühvorgangs die Zwischenräume zwischen den Körnern ein Maß haben, dass alle Körner mit hoher partieller Strömungsgeschwindigkeit umspült werden, wobei nur eine geringe Durchfeuchtung stattfindet. Im Anschluss an diesen zeitlichen Abschnitt mit intensiver Strömung wird das Volumen der Brühkammer vergrößert, sodass sich die Zwischenräume vergrößern und die angefeuchteten Körner aufquellen können. In dieser Phase werden nun alle angefeuchteten Körner gut umspült und entsprechend durchfeuchtet. Dadurch werden die für die verwendete Bohnensorte richtigen Geschmackstoffe aktiviert. Dies kann beispielsweise für einen Espresso erwünscht sein, wenn der Benutzer mehr Bitterstoffe und weniger Säure wünscht.

In einer vorteilhaften Weiterbildung der Erfindung oder einer der vorstehend genannten Ausführungen ist die Steuereinrichtung dazu eingerichtet, nach Erreichen des zweiten Volumens und nach einer vorbestimmten Verweildauer die Brühkammer zu einem dritten Volumen zu verfahren, welches sich vom zweiten Volumen unterscheidet. Damit können weitere Geschmacksstoffe gelöst oder das Lösen von unerwünschten Geschmacksstoffen gehemmt werden.

In einer insgesamt vorteilhaften Ausführung ist der Stellantrieb derart konzipiert, dass dieser die Brühkammer gegen das feststehende Brühsieb bewegt. Dies ist besonders einfach umzusetzen, wenn ohnehin eine bewegliche Kammer vorhanden ist, die nach dem Befüllen mit Kaffeemehl entsprechend bewegt wird, um das Kaffeemehl innerhalb der Brühkammer zu verpressen. Das Verfahren oder Bewegen der Brühkammer während die Pumpe aktiviert ist, um das Brühwasser in die Kammer zu pumpen, kann mittels Umprogrammieren der Steuereinrichtung bereitgestellt werden, ohne konstruktive Änderungen.

In einer anderen Ausführung ist der Stellantrieb derart konzipiert, dass dieser das Brühsieb gegen die feststehende Brühkammer bewegt. Dies kann Vorteile bieten, wenn beispielsweise wenig Bauraum im Gerät vorhanden ist.

In einer weiteren Ausführung ist die Brühkammer mit einem beweglichen Boden ausgestattet, der sich gegenüber des Brühsiebs befindet. In dieser Ausführung ist der Stellantrieb derart konzipiert, dass dieser den innerhalb der Kammer angeordneten verschiebbaren Boden, in Richtung Brühsieb bewegt, während gleichzeitig das Brühwasser in die Brühkammer gepumpt wird.

In einer insgesamt zweckmäßigen Ausführung ist die Steuereinrichtung derart eingerichtet oder programmiert, dass sie den Stellantrieb zeitverzögert nach Beginn des Pumpens von Brühwasser in die Kammer aktiviert, sodass die Bewegung zum Verändern des Brühkammervolumens zeitverzögert nach Beginn des Brühvorgangs startet, wobei die vorbestimmte Verzögerung bevorzugt auf eine Dauer im Bereich zwischen 1 Sekunde und 10 Sekunden festgelegt ist.

In einer weiteren insgesamt zweckmäßigen Ausführung ist die Steuereinrichtung derart eingerichtet oder programmiert, dass sie den Stellantrieb für den Bewegungsvorgang zum Verändern des Kammervolumens vom ersten Volumen zum zweiten Volumen in einer vorbestimmten Zeit oder Dauer aktiviert, wobei diese vorbestimmte Zeit bevorzugt einen Wert im Bereich zwischen 4 Sekunden und 15 Sekunden aufweist.

In einer weiteren insgesamt zweckmäßigen Ausführung ist die Steuereinrichtung derart eingerichtet oder programmiert, dass sie den Stellantrieb für den Bewegungsvorgang zum Verändern des Kammervolumens vom zweiten Volumen zum dritten Volumen in einer vorbestimmten Zeit oder Dauer aktiviert, wobei diese vorbestimmte Zeit bevorzugt einen Wert im Bereich zwischen 4 Sekunden und 10 Sekunden aufweist.

In einer insgesamt zweckmäßigen Ausführung besitzt der Ausgang der Brühkammer ein Druckventil oder eine Drossel, um während des Pumpens von Brühwasser in die Kammer einen Brühdruck zu erzeugen. Dies wird als sogenanntes Crema-Ventil bezeichnet. Bevorzugt ist dieses während des gesamten Brühablaufs, also während die Pumpe aktiviert ist und das Volumen der Brühkammer verändert wird, auf einen konstanten Druck eingestellt. Die Ventilvorrichtung ist dabei für einen Fluiddruck innerhalb der Brühkammer in einem Bereich von 0,5 bar bis 8 bar ausgebildet. Mit einer Auswahl eines Brühdrucks aus diesem Bereich lassen sich nahezu alle heute vorstellbaren Kaffeegetränke in einem Kaffeevollautomaten herstellen.

In einer anderen Ausführung mit Druckventil in der Ausgangsleitung oder im Ausgang der Brühkammer ist dieses so konfiguriert, eingestellt oder gesteuert, dass sich während des Pumpens von Brühwasser in die Kammer ein veränderlicher Brühdruck einstellt. Dies kann für bestimmte Pulversorten oder Getränkezubereitungen eine nochmals verbesserte Extraktion bewirken. Die Ventilvorrichtung ist dabei für einen veränderlichen Fluiddruck innerhalb der Brühkammer in einem Bereich von 0,5 bar bis 8 bar ausgebildet. Mit einer Auswahl aus diesem Bereich lassen sich nahezu alle heute vorstellbaren Kaffeegetränke in einem Kaffeevollautomaten herstellen.

Insgesamt ist es für die Erfindung und alle genannten Ausführungen zweckmäßig, dass die Steuereinrichtung dazu eingerichtet ist, die Pumpe für eine Gesamtdauer im Bereich von 15 bis 50 Sekunden, bevorzugt 15 bis 30 Sekunden zu aktivieren, und nach Ablauf der genannten Dauer zu deaktivieren, um den Brühvorgang zu beenden.

In einer zweckmäßigen Ausführung umfasst der Getränkeautomat ein Gehäuse zur Aufnahme und zum Fixieren der Brüheinheit, wobei das Gehäuse so ausgebildet ist, dass sich die Brühkammer während der Getränkezubereitung in einer Schrägstellung in einem Winkel im Bereich 15° bis 50°, bevorzugt 15° bis 35° zur Vertikalen positioniert ist. Aufgrund des veränderlichen Volumens wird erreicht, dass sich die Kanalstruktur zwischen den Körnern während des Brühvorgangs verändert, sodass anfangs eventuell entstandene Luftblasen, die sich in den Eckbereichen ausbilden können, im Verlauf der Durchflutung vollständig entfernt werden. Dies gilt auch für eine senkrecht stehende Brühkammer.

Ein Ausführungsbeispiel der Erfindung ist in den Zeichnungen rein schematisch dargestellt und wird nachfolgend näher beschrieben. Es zeigen
- Fig. 1:: einen Heißgetränkebereiter in einer teilweise schematischen Schnittdarstellung;
- Fig. 2:: eine bevorzugte Ausführung des Strömungsleitungssystems in einer schematischen Ansicht;
- Fig. 3, 4:: die Brühkammer in einer schematischen Schnittdarstellung in verschiedenen Situationen;
- Fig. 5, 6:: Skizzen des Pulvers innerhalb der Brühkammer und
- Fig. 7:: einen zeitlichen Ablauf eines Brühvorgangs.

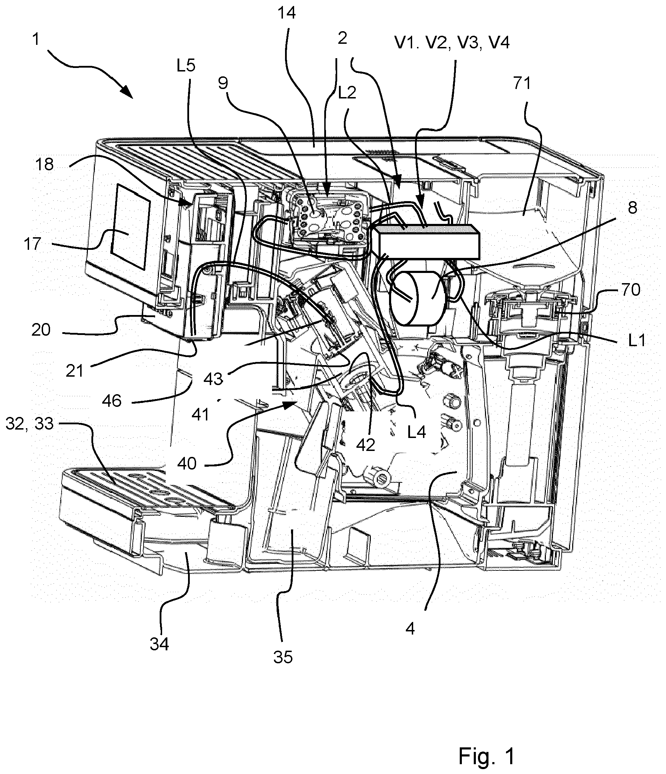

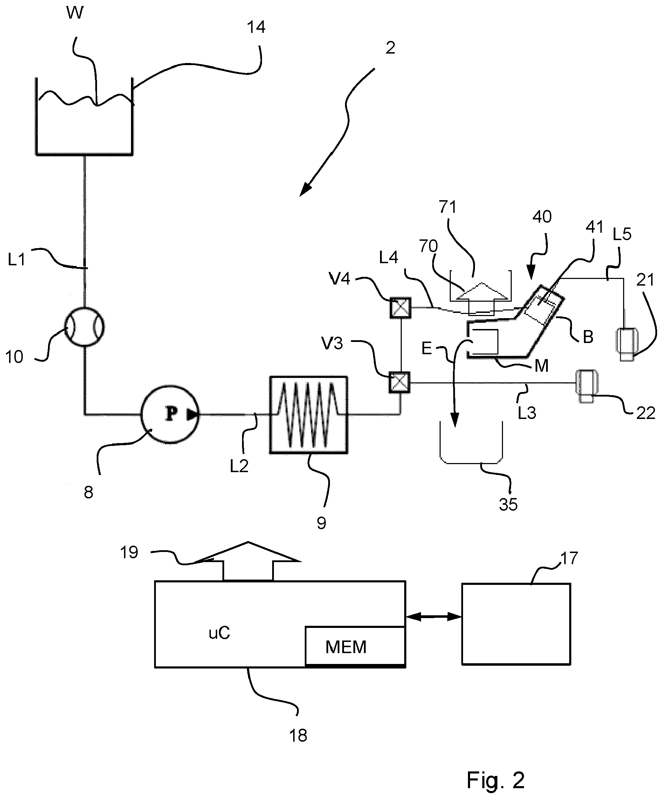

Die Fig.1 zeigt am Beispiel eines als Standgerät ausgebildeten Heißgetränkebereiter 1 mit allen relevanten Komponenten für die Zubereitung eines Heißgetränks. Der Getränkebereiter 1 umfasst unter anderem ein Gehäuse 11, in dem der Vorratsbehälter 71 für Kaffeebohnen mit darunter angebrachtem Mahlwerk 70 mit Motor, den Wasserbehälter 14 sowie die Möglichkeit, der Unterbringung des Strömungsleitungssystems 2. Das Gehäuse 11 dient ferner als Trägergestell für die Brüheinheit 40, wobei sich in der eingesetzten Position eine Schrägstellung der Brühkammer 41 ergibt. Im Frontbereich des Heißgetränkebereiter 1 verfügt dieser über einen höhenbeweglichen Auslass 20, in dem mehrere Entnahmeeinrichtungen, hier Auslassdüsen 21, 22 untergebracht sind. Bei der Entnahmeeinrichtung 22 handelt es sich im vorliegenden Fall um eine Dampfdüse zur Abgabe heißen Wasserdampfes oder heißem Wasser, beispielsweise zur Verdünnung eines fertigen Kaffees oder zur Zubereitung eines Teegetränks. Die Entnahmeeinrichtung 21 stellt eine Ausgabeleitung oder Ausgabedüse 21 zur Abgabe von Kaffeegetränken dar. Eine Brüheinheit 40 mit einer Brühkammer 41 im Inneren des Gerätes 1 dient zur Zubereitung des Getränkes, wobei in die Brühkammer 41 das Kaffeepulver eingebracht und anschließend mit heißem Wasser durchflutet wird, sodass zur Ausgabeleitung und durch die Ausgabedüse 21 das fertige Kaffeegetränk ausgegeben wird. Bei dieser Ausführung sind die Ausgabedüsen 21, 22 in der Höhe verschiebbar angeordnet, so dass sie der Höhe eines auf der Abstellfläche 33 abgestellten Trinkgefäßes angepasst werden kann, ohne dass bei der Abgabe des Getränkes ein Verspritzen erfolgt. Den oberen Abschluss der Abstellfläche 33 bildet ein Abtropfblech 32, das mit Öffnungen und Schlitzen versehen ist, um Flüssigkeitsreste in einer unterhalb des Abtropfbleches 32 vorhandenen Auffangschale 34 abzuführen. Ferner umfasst der Heißgetränkebereiter 1 einen Tresterbehälter 35, in den die aufgebrauchte Substanz, beispielsweise Kaffeekuchen, nach Vollendung der Getränkezubereitung hineingeworfen wird. Das Gerät 1 umfasst ferner eine Steuereinrichtung 18, die dazu eingerichtet ist, die einzelnen Funktionsbaugruppen, wie Pumpen 8, Ventile V1 bis V4 und Heizeinrichtung 9 und Mahlwerk 70, soweit vorhanden, zu steuern, wie es für die Zubereitung des jeweils ausgewählten Getränkes notwendig ist. Die Steuereinrichtung 18, die als Mikrocontroller uC mit einem zugeordneten Speicher MEM ausgeführt ist (Fig. 2), ist in dieser Ausführung ferner dazu eingerichtet, die Ventile V1, V2 des Strömungsleitungssystems 2 so anzusteuern, dass das heiße Wasser durch die Brühkammer 41, gepumpt wird.

Fig. 2 zeigt einen vereinfachten Schaltplan eines Strömungsleitungssystems 2 innerhalb eines Getränkeautomaten 1. Von einer Wasserquelle 14, in diesem Beispiel ein Wassertank, wird das Strömungsleitungssystem 2 mit frischem Wasser versorgt. Das Strömungsleitungssystem 2 umfasst dabei Leitungsabschnitte und Komponenten, die zur Zubereitung von Getränken dienen. Zur Erzeugung der Strömung innerhalb des Strömungsleitungssystems 2 sowie des erforderlichen Druckaufbaus dient eine Pumpe 8. Darüber hinaus weist der zur Zubereitung der Getränke genutzte Teil des Strömungsleitungssystems 2 eine Heizeinrichtung 9 zur Erwärmung des Wassers 2a sowie mehrere Entnahmeeinrichtungen 21, 22, sowie Leitungsabschnitte L1, L2, L3, L3 zur Verbindung der einzelnen Komponenten miteinander auf, wobei die Dampfdüse 22 zur Ausgabe von Dampf und zur Ausgabe von heißem Wasser und/oder die Kaffeedüse 21 zur Ausgabe des zubereiteten Kaffeegetränkes oder Teegetränkes, je nachdem, welches Pulver oder Substrat der Brühkammer 41 zugeführt wurde, vorgesehen ist. Zur selektiven Ansteuerung der Entnahmeeinrichtungen 21, 22 dienen die Mehrwegeventile V3 und V4, die den Entnahmeeinrichtungen 21, bzw. der Brühkammer 41 in Strömungsrichtung betrachtet vorgeschaltet sind. Darüber hinaus kann das Strömungsleitungssystem 2 ein Messgerät zur Volumenstrommessung, das als Flowmeter 10 bezeichnet wird, aufweisen, das hilfreich ist, um eine genaue Menge frischen Wassers zu bestimmen, die für die Zubereitung eines Getränkes erforderlich ist. Darüber hinaus lässt sich mit einer derartigen Messeinrichtung 10 auch die Anzahl der hergestellten Getränke bestimmen.

Ein Abfallbehälter 35 ist dazu vorgesehen, den aufgebrauchten Kaffeesatz aufzunehmen. Wenn der Brühvorgang beendet ist, wird die Brühkammer 41 aus der Brühposition B in die Entleerposition M verfahren und der Kaffeesatz aus der Brühkammer 41 herausgefördert, wie es mit dem Pfeil E skizziert ist.

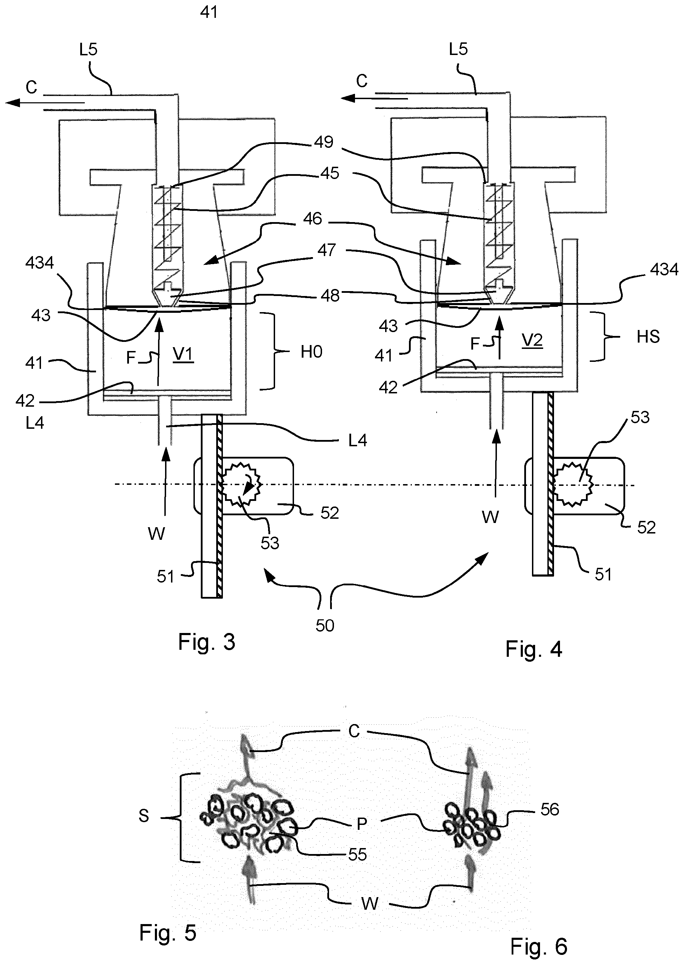

Eine Steuereinrichtung 18 mit einem Mikrocontroller uC und einer Speichereinrichtung MEM dient zur Durchführung einer Getränkezubereitung, wobei hierbei die Aktivierung der Heizeinrichtung 9, der Ventile V1, V2, V3 und V4 sowie der Pumpe 8, der Brühkammer 40 und bedarfsweise weiteren Komponenten, wie einem Mahlwerk 70 durch entsprechende Signalverbindungen 19 erfolgt. In Fig. 2 ist die Signalverbindung 19 zum Motor der Pumpe 8 und zu den anderen, zu steuernden Komponenten grob skizziert, wobei die Ansteuerung der Pumpe 8 in einer bevorzugten Ausführung derart erfolgt, dass verschiedene Förderleistungen eingestellt werden können. Die Steuereinrichtung 18 ist in einer bevorzugten Ausführung ferner dafür programmiert, den Servomotor 52 (Fig. 3, 4) zum Verändern des Volumens der Brühkammer 41 zu aktivieren oder zu betreiben.

Das Verdichtungsverhältnis H0 zu HS sowie die Dauer für den Übergang von der ersten Position H0 zur zweiten Position HS kann bevorzugt einstellbar sein. Hierzu ist die Bedienvorrichtung 20 mit entsprechenden Möglichkeiten zur Parametereingabe ausgestattet. Die Bedienvorrichtung 20 ist generell vorhanden und dient zur Auswahl und Aktivierung der Getränkezubereitung oder von Wartungsvorgängen.

Fig. 3 zeigt schematisch die Brühkammer 41 in einer ersten Brühposition H0, die
die für das erste, größere Kammervolumen V1, beispielsweise 50 ccm, vorgesehen ist. Im Inneren der Brühkammer 41 ist in Fluidrichtung des einlaufenden Wassers W eingangsseitig die Einlassleitung L4 mit dem Einlasssieb 42 angeordnet. Auf der gegenüberliegenden Seite der Brühkammer 41 ist das Brühsieb 43 mit der daran angeschlossenen Auslassleitung L5 angeordnet. Zwischen den beiden Sieben 42, 43 ist die Aufgusssubstanz 60, beispielsweise Kaffeemehl, eingebracht. Zwischen dem Brühsieb 43 und der Auslassleitung L5 bzw. in der Auslassleitung L5 ist das Ventil 46 angeordnet, das selbständig bei Überschreiten eines vorgegebenen Fluiddrucks öffnet und das Aufgussfluid durch die Auslassleitung L5 strömen lässt. Das Ventil 46 umfasst einen Ventilsitz 48, auf den der bewegliche Ventilkörper 47 zur Anlage kommt, wenn der Körper 47 mittels der Druckfeder 45 gegen den Sitz 48 gedrückt wird. Die Feder 45 liegt dabei mit dem einen Ende auf dem Ventilkörper 47 auf und stützt sich mit dem gegenüberliegenden Ende an dem Anschlag 49 ab. Die Feder 45 ist so dimensioniert, dass zum Bewegen des Ventilkörpers 47 aus dem Ventilsitz 48 heraus ist ein vorgegebener Fluiddruck bereitgestellt werden muss, beispielsweise ein Druck im Bereich von 0,3 bis 0,8 Bar, vorzugsweise 0,5 Bar. Das Brühsieb 43 besteht aus einer Platte mit Löchern und ist dabei eben, konkav oder konvex gewölbt. Die umlaufende Dichtung 434 bildet eine dichtende Anlage des Siebs 43 innerhalb der Brühkammer 41 und dichtet die Brühkammer 41 gegenüber der Umgebung der Kammer 41 ab. Die Auslassleitung L5 ist dem Ventil 46 nachgelagert und dient dazu, die Aufgussflüssigkeit C zur Ausgabedüse 21 (Fig. 1, Fig. 2) zu führen. Die Kammer 41 umfasst ferner einen Stellantrieb 50, der einen Mitnehmer 51 und einen den Mitnehmer antreibenden Stellmotor 52 umfasst. Der Mitnehmer 51 ist an der Brühkammer 51 angebracht bzw. befestigt und kann diese demzufolge bewegen. Der Stellmotor 52 ist mit dem Mitnehmer gekoppelt, um diesen zu bewegen. Im dargestellten Beispiel ist der Mitnehmer 51 eine Zahnstange, in die das am Stellmotor 52 angetriebene Zahnrad 53 eingreift und bei Drehung die Zahnstange 52 linear verfahren kann. In Fig. 3 ist als erste Position eine Kammerhöhe H0 eingestellt, in der ein großes Kammervolumen V1 bereitgestellt wird. Aufgrund des aktivierten Stellantriebs 50 bzw. Motors 52 wird der Mitnehmer 51 und damit der Kammerboden 42 in Richtung Brühsieb 43 verfahren, sodass nach Ablauf der Verfahrzeit die Kammer 41 eine geringere Höhe HS aufweist, und dadurch das kleinere zweite Volumen V2 bereitstellt. Diese Situation ist in Fig. 4 dargestellt.

Die Kammer 41 ist für alle Ausführungen bevorzugt als Hohlzylinder ausgebildet, sodass eine Hubbewegung des Brühsiebs 43 oder des beweglichen unteren Bodens 42 einfach möglich ist. Bevorzugt weist die Innenfläche der hohlzylindrischen Kammer 41 eine harte und glatte Oberfläche auf, damit die Dichtung 434 geringe Reibkräfte verursacht, wodurch insgesamt eine lange Lebensdauer der Gesamtanordnung bereitgestellt wird. Bevorzugt kann für die Innenseite der Kammer eine metallische oder keramische Beschichtung aufgetragen sein oder die Kammer besteht aus einem solchen Material. Ein harter Kunststoff mit einer glatten Oberfläche kann auch verwendet werden.

Fig. 5 skizziert die Situation des Pulvers S innerhalb der Kammer 41 in der ersten Position gemäß Fig. 3. Hier befinden sich die Körner P lose innerhalb der Brühkammer 41, wodurch sich eine Kanalstruktur 55 mit Kanälen mit großem Querschnitt ausbildet.

Fig. 6 skizziert die Situation des Pulvers S innerhalb der Kammer 41 in der zweiten Position gemäß Fig. 4. Hier sind die Körner P innerhalb der Brühkammer 41 komprimiert, wodurch sich eine Kanalstruktur 56 mit Kanälen mit kleinerem Querschnitt ausbildet.

Durch die variable Brühkammer 41 wird erreicht, dass zu Beginn des Brühvorgangs die Zwischenräume 55 zwischen den Körner P (je nach Geschmacksrichtung) ein Maß haben, dass alle Körner P gut umspült werden und entsprechend durchfeuchtet werden können. Dadurch werden die für das zuzubereitende Getränk gewünschten oder optimal geeigneten Geschmackstoffe aus den einzelnen Körnern P aktiviert.

Insgesamt bewirkt die Verdichtung eine stärkere Verpressung des Pulvers S, was die Zwischenräume 55, 56 verkleinert, so dass die Strömungsgeschwindigkeit in den Zwischenräumen 56 erhöht wird (Wechsel von einer Verwirbelung des Wassers in den Zwischenräumen 56 zu einer Art Kanalisierung). Dadurch werden angelöste Geschmackstoffe aus den einzelnen Körner P in dem schnell strömenden Brühwasser mitgerissen und dadurch zuverlässig in die Getränkeflüssigkeit C geleitet.

Insgesamt beziehen sich alle Positions- und Richtungsangaben auf die betriebsgemäße Aufstellposition des Getränkebereiters 1 bzw. den betriebsgemäßen Einsatz der Brüheinheit 40.

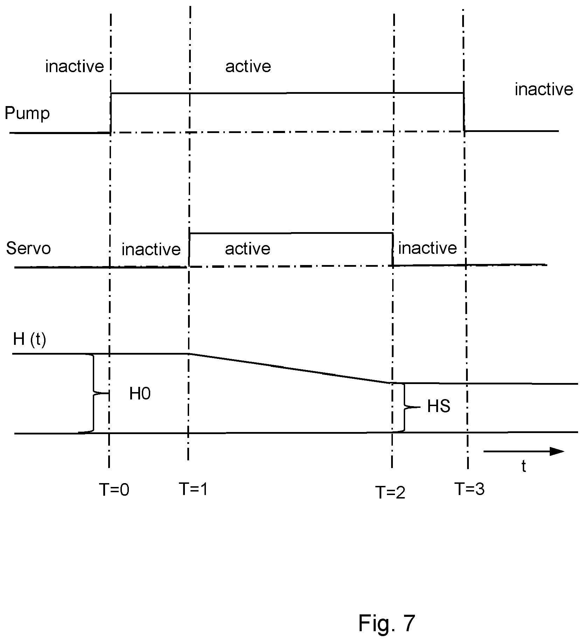

Fig. 7 zeigt in Diagrammen den Ablauf eines Brühvorgangs mit veränderlicher Brühkammer 41. Zum Zeitpunkt T=0 befindet sich die Brühkammer 41 in der ersten Position und besitzt die Höhe H0. Zu diesem Zeitpunkt befindet sich das Kaffeepulver in der vorbestimmten Menge in der Brühkammer 41 und ist hierbei nicht oder geringfügig komprimiert. Ab T0 wird der Brühvorgang gestartet, sodass die Pumpe 8 aktiviert und gegebenenfalls der Heizkörper 7, um das Brühwasser in die Kammer 41 zu fördern. Nach Ablauf einer vorbestimmten Zeit wird zum Zeitpunkt T=1 der Stellantrieb "Servo" 50 aktiviert, um die Brühkammer 41 zu verfahren, also das Volumen in der Brühkammer 41 zu verkleinern. Zum Zeitpunkt T=2 ist die Kammerhöhe HS erreicht, sodass nun das zweite, kleinere Volumen V2 erreicht ist. Nun ist das in der Kammer 41 befindliche Pulver stärker verdichtet, als im Zeitraum zwischen T=0 und T=1. Die Pumpe 8 bleibt weiterhin aktiviert, sodass das Brühwasser W durch das stärker verdichtete Kaffeepulver gepresst wird. Zum Zeitpunkt T=3 ist der Brühvorgang beendet, das Getränk ist fertig.

## Patentansprüche

1. Getränkeautomat (1) mit einem Strömungsleitungssystem (2) mit
- einer Wasserquelle (14)
- einer Brüheinheit (40), welche folgende Merkmale umfasst:
ein Brühsieb (43);
eine Brühkammer (41) zur Aufnahme von aufzubrühender Brühsubstanz (S);
ein Wassereinlassmittel (42) mit zumindest einer Einlassleitung (L4) zum Einlassen von Brühwasser (W) in die Brühkammer (41), wobei die Brühkammer (41) zwischen dem Brühsieb (43) und dem Wassereinlassmittel (42) angeordnet ist und das Wassereinlassmittel (42) in einer Durchlaufrichtung (F) des Brühwassers (W) durch die Brühkammer (41) dem Brühsieb (43) vorgelagert ist,
- einer Zuführungsvorrichtung (70, 73) zum Zuführen einer vorbestimmten Menge einer Brühsubstanz (S) in die Brühkammer (41),
- eine Heizeinrichtung (9) zum Erhitzen des der Brühkammer (41) zugeführten Wassers (W)
- eine Pumpe (8), die dazu ausgebildet ist, das Wasser (W) aus der Quelle (14) zur Brühkammer (41) zu fördern,
- eine Steuereinrichtung (18) zur Aktivierung und Deaktivierung der genannten Aktoren (8, 9, 72) zur Zubereitung eines ausgewählten Getränks,
**dadurch gekennzeichnet,**
**dass** das Brühsieb (43) bezogen zum Inneren der Brühkammer (41) mittels eines von der Steuereinrichtung (18) gesteuerten Stellantriebs (50) verfahrbar ist, um das Volumen der Brühkammer (41) zu verändern, wobei die Steuereinrichtung (18) dazu eingerichtet ist, den Stellantrieb (50) während aktivierter Pumpe (8) zu aktivieren.

2. Getränkeautomat (1) nach Anspruch 1,
wobei die Steuereinrichtung (18) dazu eingerichtet ist, den Stellantrieb (50) derart zu aktivieren, dass die Brühkammer (41) zu Beginn der Getränkezubereitung ein erstes Volumen (V1) und nach Ablauf einer vorbestimmten Dauer während der Getränkezubereitung ein zweites Volumen (V2) aufweist, welches sich vom ersten Volumen (V1) unterscheidet.

3. Getränkeautomat (1) nach Anspruch 1 oder 2,
wobei der Unterschied des zweiten Volumens (V2) gegenüber dem ersten Volumen (V1) im Bereich des 0,8 - bis 0,4 -fachen eingestellt ist, wobei die Steuereinrichtung (18) dazu eingerichtet und programmiert ist, den Stellantrieb (50) entsprechend zu aktivieren und zu deaktivieren zur Bereitstellung dieses Verdichtungsverhältnisses.

4. Getränkeautomat (1) nach Anspruch 1 oder 2,
wobei der Unterschied des zweiten Volumens (V2) gegenüber dem ersten Volumen (V1) im Bereich des 1,2 - bis 2,4 -fachen eingestellt ist, wobei die Steuereinrichtung (18) dazu eingerichtet und programmiert ist, den Stellantrieb (50) entsprechend zu aktivieren und zu deaktivieren zur Bereitstellung dieses Verdichtungsverhältnisses.

5. Getränkeautomat (1) nach einem der Ansprüche 1 bis 4,
wobei die Steuereinrichtung (18) dazu eingerichtet ist, nach Erreichen des zweiten Volumens (V2) und bevorzugt nach einer vorbestimmten Verweildauer die Brühkammer (41) zu einem dritten Volumen zu verfahren, welches sich vom zweiten Volumen (V2) unterscheidet.

6. Getränkeautomat (1) nach einem der Ansprüche 1 bis 5,
wobei der Stellantrieb (50) dazu ausgebildet ist, die Brühkammer (41) gegen das feststehende Brühsieb (43) zu bewegen.

7. Getränkeautomat (1) nach einem der Ansprüche 1 bis 5,
wobei der Stellantrieb (50) dazu ausgebildet ist, das Brühsieb (43) gegen die feststehende Brühkammer (41) zu bewegen.

8. Getränkeautomat (1) nach einem der Ansprüche 1 bis 5,
wobei die Brühkammer (41) einen beweglichen Boden (42) umfasst, der sich gegenüber des Brühsiebs (43) befindet, und der Stellantrieb (50) dazu ausgebildet ist, den innerhalb der Kammer (41) angeordneten verschiebbaren Boden (42), in Richtung Brühsieb (43) zu bewegen.

9. Getränkeautomat (1) nach einem der Ansprüche 1 bis 8,
wobei die Steuereinrichtung (18) derart eingerichtet oder programmiert ist, den Stellantrieb (50) zeitverzögert nach Beginn des Pumpens von Brühwasser (W) in die Kammer (41) zu aktivieren, wobei die vorbestimmte Verzögerung bevorzugt auf eine Dauer im Bereich zwischen 1 Sekunde und 10 Sekunden festgelegt ist.

10. Getränkeautomat (1) nach einem der Ansprüche 1 bis 9,
wobei die Steuereinrichtung (18) derart eingerichtet oder programmiert ist,
den Stellantrieb (50) für den Bewegungsvorgang zum Verändern des Kammervolumens vom ersten Volumen (V1) zum zweiten Volumen (V2) in einer vorbestimmten Zeit oder Dauer aktiviert, wobei diese vorbestimmte Zeit bevorzugt einen Wert im Bereich zwischen 4 Sekunden und 15 Sekunden aufweist.

11. Getränkeautomat (1) nach einem der Ansprüche 1 bis 10,
wobei die Steuereinrichtung (18) derart eingerichtet oder programmiert ist,
den Stellantrieb (50) für den Bewegungsvorgang zum Verändern des Kammervolumens vom zweiten Volumen (V2) zum dritten Volumen in einer vorbestimmten Zeit oder Dauer zu aktivieren, wobei diese vorbestimmte Zeit bevorzugt einen Wert im Bereich zwischen 4 Sekunden und 10 Sekunden aufweist.

12. Getränkeautomat (1) nach einem der Ansprüche 1 bis 11,
wobei im Ausgang der Brühkammer (41) ein Druckventil (46) oder eine Drossel angeordnet ist, um während des Pumpens von Brühwasser (W) in die Kammer (41) einen Brühdruck zu erzeugen, wobei das Ventil (46) während des gesamten Brühablaufs, also während die Pumpe (8) aktiviert ist, auf einen konstanten Druck eingestellt ist.

13. Getränkeautomat (1) nach einem der Ansprüche 1 bis 11,
wobei im Ausgang der Brühkammer (41) ein Druckventil (46) oder eine Drossel angeordnet ist, um während des Pumpens von Brühwasser (W) in die Kammer (41) einen Brühdruck zu erzeugen, wobei das Ventil während des Brühablaufs, also während die Pumpe (8) aktiviert ist, einen veränderlichen Druck bereitstellt.
